# EUROPEAN PATENT APPLICATION

(11) **EP 4 843 530 A1**
(43) Date of publication of application: **25.11.2026**
(21) Application number: 26180775.4
(22) Date of filing: 22.05.2026
(51) Int. Cl.: A61C 5/77, A61C 13/00, A61C 13/08, A61C 13/225

(54) **DENTAL RESTORATION PREFORM, SYSTEM FOR FORMING A DENTAL RESTORATION PREFORM, AND METHOD OF FORMING A DENTAL RESTORATION PREFORM**

(30) Priority: 23.05.2025 US 202519217949
(71) Applicant: Zetta25 AG, 8047 Zurich (CH)
(72) Inventor: SCHNEIDER, Hans-Christian, 64683 Einhausen (DE); SCHAEFER, Andreas, 64625 Bensheim (DE)
(74) Representative: Taor, Simon Edward William

(57) **Abstract**

Dental restoration preforms, systems for forming a dental restoration preform, and methods of forming a dental restoration preform are provided. In an embodiment, the dental restoration preform includes a first part that corresponds to a main body and a second part that that is located on an extremity of the first part. The second part is more shapable than the first part such that the dental professional may adjust the second part during the procedure of implanting the dental restoration.

## Description

### BACKGROUND

### Field of the Invention

Embodiments of the invention relate to a dental restoration preform, a system for forming a dental restoration preform, a method of forming a dental restoration preform, and a dental restoration made from the dental restoration preform.

### Related Art

Dental restorations are essential procedures in dentistry for repairing and replacing damaged or decayed teeth, restoring their function, appearance, and structural integrity. Common types of dental restorations include crowns, bridges, inlays, onlays, and veneers. Crowns encase a tooth to protect the tooth after extensive damage or root canal treatment. Bridges replace one or more missing teeth by anchoring to adjacent teeth, restoring the bite and preventing teeth from shifting. Inlays and onlays fill larger cavities and provide strength and durability. Advances in dental materials, such as composite resins and ceramics, have made restorations more natural-looking, blending seamlessly with the surrounding teeth. These restorations not only improve oral health and functionality but also enhance aesthetic appeal, supporting long-term dental health and patient confidence.

In one type of dental restoration procedure, a dental professional manually forms and places a restorative material directly onto the prepared tooth. A composite resin is often used for this type of restoration, as the resin can be molded and sculpted to match the natural contours of the prepared tooth. The procedure begins with the dentist cleaning out any decay from the cavity or damaged area, creating a stable foundation for the new material. Once the area is prepared, the composite resin is applied in layers, with each layer carefully shaped and hardened using a special curing light. This layering technique allows the dentist to recreate the natural shape and translucency of the tooth, ensuring that it blends in with the surrounding teeth. After the final layer is hardened, the restoration is polished to achieve a smooth, lifelike finish.

Another type of dental restoration procedure uses CAD/CAM (Computer-Aided Design/Computer-Aided Manufacturing) to create custom restorations. This process begins with the dentist scanning the patient's tooth using a digital scanner to create a detailed three-dimensional model of the area needing restoration. Using specialized CAD software, the dentist designs the restoration to fit the dimensions and contours of the patient's tooth. Once the design is complete, the data can be sent to a machine, often located in the dentist's office, which fabricates the restoration. One type of machine that is often used to fabricate the restoration is a three-dimensional printer, which is guided by the three-dimensional model of the restoration to extrude biocompatible materials into the shape of the dental restoration. The dentist then places and bonds the custom-made restoration directly onto the prepared tooth, ensuring a precise fit and natural appearance.

The manual procedure of forming the dental restoration and the CAD/CAM procedure forming the dental restoration each have advantages and disadvantages. In a manual restoration procedure, the dentist can make on-the-spot adjustments and sculpt the material directly in the mouth. That is, a dentist can tailor the restoration with precision that is harder to achieve with CAD/CAM techniques, particularity in areas where a precise fit is required such as a preparation margin where the restoration meets the natural tooth. On the other hand, CAD/CAM dental restoration technology allows for a custom restoration to be quickly designed, formed, and placed. Also, the materials used in CAD/CAM restorations are highly durable and resistant to wear, providing long-lasting results. The technology further enables a uniform quality in restorations.

### SUMMARY OF THE INVENTION

In view of the above, it is an object of the present invention to improve the integration of a dental restauration in areas where the restoration meets the natural tooth. This object is solved by the invention according to the independent claims.

According to some embodiments of the invention, a dental restoration preform comprises a first part corresponding to a main body and a second part that has a shape that is located on an extremity of the first part. For example, the second part can correspond to preparation margin that is a border on the prepared tooth which is a transition to the surface of the dental restoration preform. That the second part corresponds to a preparation margin preferably means that the second part has a shape that corresponds to (or matches) the shape of the preparation margin. In such a way, the second part can contact the preparation margin with a precise fit. The second part is more shapable than the first part. In such a way, a dental professional may easily refine the shape of the second part during the dental restoration placement process.

The first part and the second part of the dental restoration preform represent segments with different degrees of polymerization. Hence, the first part has a higher degree of polymerization than the second part. In an embodiment, there are two segments in the form of the first part and the second part. However, in other embodiments, there can be three or more segments. A plurality of layers may be provided with different degrees of polymerization, preferably a higher degree of polymerization is provided in a direction towards the center of the restoration. The polymerization may be provided in a gradient.

Preferably, the second part at least partially encircles the first part. That the second part is more shapable means that it is more plastically deformable than the first part. Plastically deformable means that the restoration can be shaped by a dentist by applying manual force to a tool.

The degree of polymerization of the second part is selected such that the second part is shapeable. An exemplary measure of the degree of polymerization is the degree of conversion D_{c}, which defines the degree of conversion of double bonds. This is a suitable measure for linear polymers, and can be represented as: ${D}_{c} = \left({n}_{0}-{n}_{p}\right) / {n}_{0} * 100 %$ where:
D_{c} = Degree of Conversion
N₀ = Number of polymerizable groups at time 0
Nₚ= Number of polymerizable groups after polymerization
The degree of conversion of the first part can be between 70 and 100 percent, typically about 80-90%. In an advantageous embodiment, the degree of conversion of the first part can be about 85%. The degree of conversion of the second part can be between 0 and 20 percent, preferably between 0 and 10%.

The second part is preferably plastically shapable. In an embodiment, the first part and the second part are made from the same material.

According to other embodiments of the invention, a system is provided for making a dental restoration preform. The system comprises a computer including at least one processor configured to read out and execute instructions stored in at least one memory to thereby cause the computer to function as a receiving unit configured to receive three-dimensional scanning data from a scan of an area that the dental restoration preform is to be placed, a model creation unit configured to create a model of the dental restoration preform using the three-dimensional scanning data, a segmenting unit configured to determine at least one segmented part of the dental restoration preform model that corresponds to a preparation margin on the tooth, and an output unit configured to output the dental restoration preform model including the at least one segmented part. The system further comprises a dental restoration preform fabrication machine configured to receive the dental restoration preform model from the computer and to fabricate the dental restoration preform based on the dental restoration preform model such the dental restoration preform includes a first part and a second part corresponding to the at least one segmented part of the dental restoration preform model, with the second part being more shapeable than the first part.

According to further embodiments of the invention, a method is provided for forming a dental restoration preform. The method comprises creating three-dimensional model of a dental restoration preform, determining at least one part of the three-dimensional model of the dental restoration preform that corresponds to a preparation margin, and forming the dental restoration preform based on the dental restoration preform model with a first part and a second part that corresponds the at least one part of the dental restoration preform model that corresponds to the preparation margin, with the second part being more shapeable than the first part.

### BRIEF DESCRIPTION OF THE DRAWINGS

FIG. 1 is an illustration of a crown positioned on a prepared tooth in a mouth.
FIG. 2A is a view of a three-dimensional model of a dental restoration according to embodiments of the invention.
FIG. 2B is a view of the three-dimensional model shown in FIG. 2A with marked areas that correspond to parts of the dental restoration that are form fitting.
FIG. 3 is a cross-sectional view of a molar tooth with an inlay as illustrated in FIG. 2B.
FIG. 4 is an enlarged view of a part of the three-dimensional model shown in FIG. 2.
FIG. 5 is a conceptual view of a system for forming a dental restoration preform according to embodiments of the invention.
FIG. 6 is a flow chart showing steps of methods according to embodiments of the invention.

It should be noted that to facilitate understanding of the disclosure, in some instances the drawings may not be to actual scale and the dimensions and orientations of some components may be exaggerated.

### DETAILED DESCRIPTION OF THE INVENTION

Embodiments of the invention will now be described. The embodiments include a dental restoration preform, a system for forming a dental restoration preform, a method of forming a dental restoration preform, and a dental restoration made from the dental restoration preform. Those skilled in the art will recognize numerous variations of the disclosed embodiments as well as other embodiments within the scope of the disclosure.

As used herein, a dental restoration preform refers to an object that is formed in a shape that corresponds to a dental restoration. Within the context of this disclosure, dental restorations may be selected from the group including crowns, bridges, inlays, onlays, and veneers. As described below, the dental restoration preform requires additional processing to be transformed into the final dental restoration. In some embodiments of the invention, one or more parts of the dental restoration preform are more shapeable than other parts of the preform, with the shapeable parts fully hardened when the dental restoration preform is transformed into the final dental restoration. Within the context of the present disclosure, the terms "first part" and "second part" may also be interchangeably referred to as "first portion" and "second portion". Hence, a singular dental restoration or singular dental restoration preform may include two or more "parts" or "portions."

A correctly fitting dental restoration is essential for ensuring both the longevity of the restoration and the health of the surrounding tooth structure. A precise fit at the preparation margin-the border where the restoration meets the natural tooth-is critical to prevent gaps where bacteria can infiltrate, leading to decay or gum inflammation. The dental restoration also needs to fit snugly against the surrounding teeth and at the occlusal (biting) surface to maintain proper alignment and function within the bite. Without a secure fit in these areas, the restoration may cause discomfort, affect chewing, and increase the risk of future dental issues, making precise craftsmanship and fitting vital for effective, lasting results.

In the description that follows, the dental restoration will be exemplified as a crown. However, as will recognized by those skilled in the art, the dental restoration may be other types and forms of dental restorations, such as bridges, inlays, onlays, and veneers.

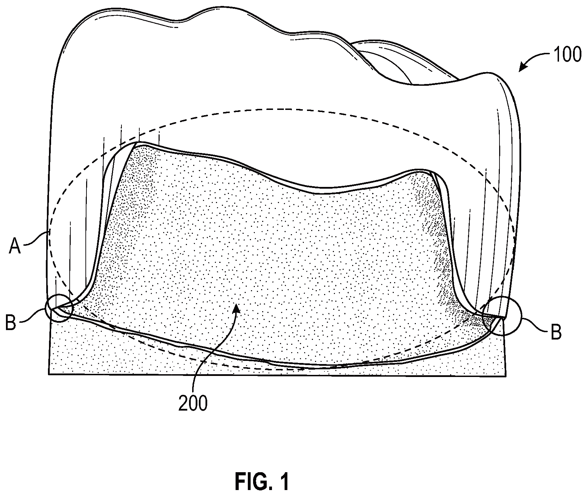

FIG. 1 is a view of a dental crown 100 placed in a mouth. The dental crown 100 fits over the prepared tooth, which is the remaining portion of the natural tooth after shaping to remove decayed or damaged areas. In the circled area A, the dental crown 100 is spaced from the prepared tooth 200, with the gaps between the dental crown 100 and the prepared tooth 200. The gaps represent a region which is being filled with another material such as an adhesive. As such, there is a large amount of tolerance in the fit of the dental crown 100 to the prepared tooth 200 the area A. The circled areas B are the preparation margin where prepared tooth 200 and the dental crown 100 meet. The preparation margin must be carefully shaped by the dental professional to create a smooth, continuous transition, which is critical for ensuring a secure fit and proper seal of the dental crown 100 to the prepared tooth 200. The dental crown 100 must be precisely shaped to match the preparation margin so that there are no gaps, which thereby reduces the risk of bacterial infiltration, decay, and gum irritation, all of which are essential for the longevity and success of a dental restoration.

In a CAD/CAM dental restoration process, a highly detailed three-dimensional model of the tooth is created using a digital scanner. Such a process often includes using a handheld scanner to capture a detailed digital impression of the prepared tooth. The scanner records intricate details of the tooth, including its contours and occlusal relationships, ensuring that the data is precise and accurate. The data is imported into CAD software that employs advanced algorithms to analyze the tooth's morphology, automatically detecting contours, margins, and occlusal relationships to create a model of the dental restoration to be fabricated. Using parametric design tools, a dental professional can then adjust the model to ensure optimal fit, aesthetics, and function. Those skilled in the art will easily recognize the systems and techniques that are applicable for a CAD/CAM dental restoration process.

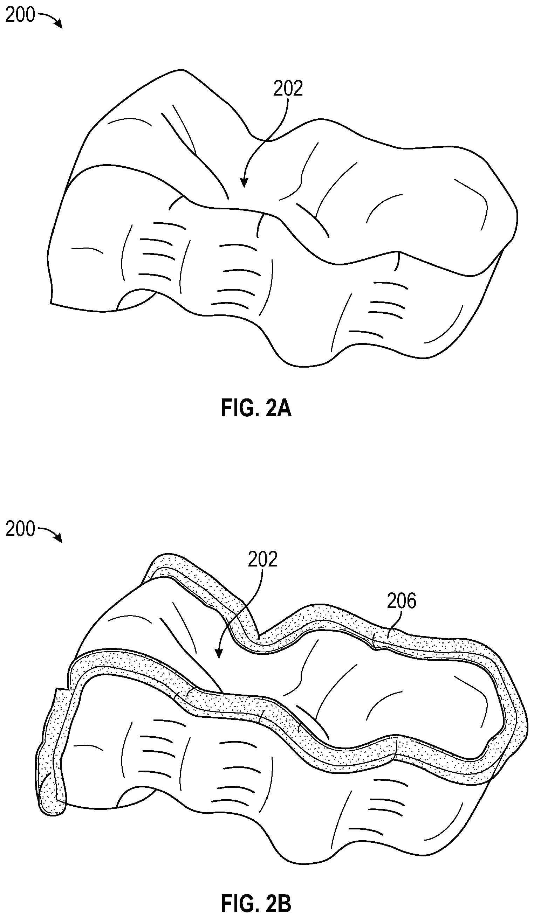

Figure 2 shows a CAD model 200 in the form of an inlay. The inlay is to be placed into the top surface of a molar tooth. In this illustration, the bottom side of the model 200 is received within a cavity of the original tooth. The open area 202 shown in the model 200 preferably corresponds to the topography of the original tooth.

According to embodiments of the invention, the model 200 for a dental restoration is segmented such that specific regions of the model 200 are identified that correspond to parts of the dental restoration where a form fit is required. That is, the areas or volumes of the model corresponding to the parts of the dental restoration that will be fit to the prepared tooth in the preparation margin are identified. Also, any other areas of the model that correspond to parts of the dental restoration where a form fit is required may also be identified.

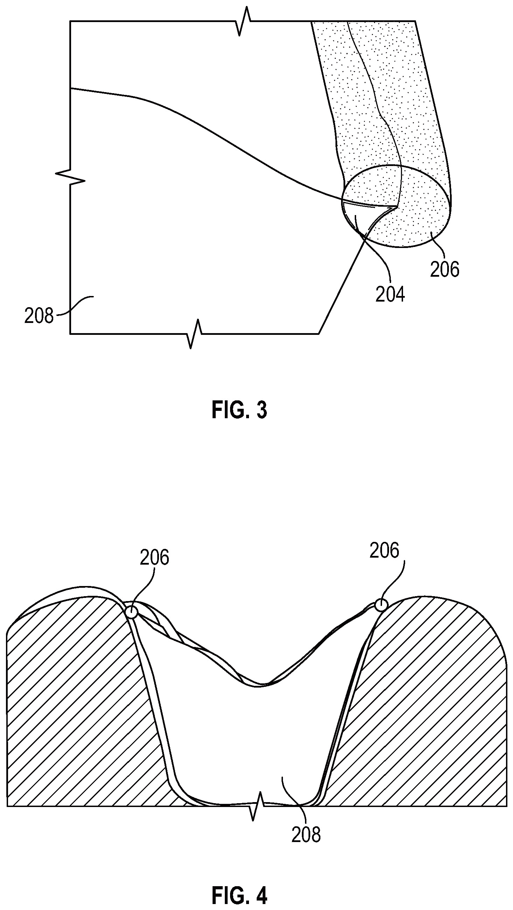

Figures 3 and 4 show examples of the segmenting of the CAD model 200 to identify the form fitting areas 204. Within the present disclosure, the term "form fitting areas" is interchangeable with the term "second part". As will be described below, a dental restoration preform is fabricated from the segmented CAD model such that the form fitting areas 204 in the border 206 are more shapeable than in a main body 208 (also referred to as "first part") of the dental restoration preform.

It should be noted that the border 206 as depicted in the figures is merely exemplary, and any number of different markers may be used to indicate the form fitting areas 204 of the model 200. Moreover, while a system may function to identify form fitting areas, no particular marking may be applied on a depiction of the model 200.

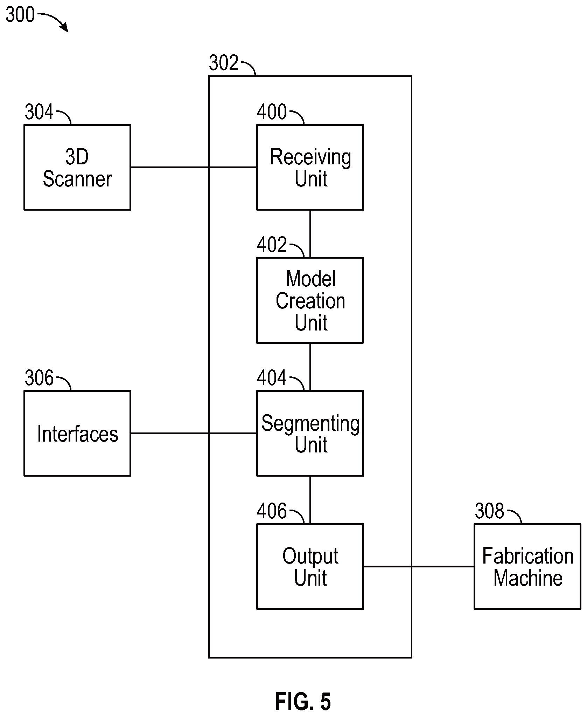

Figure 5 is a conceptual diagram of a system 300 for forming a dental restoration preform according to embodiments of the invention. In embodiments of the invention, the system 300 includes CAD/CAM functionalities for preparing a dental restoration, as described above. The system 300 includes a computer 302 that is operatively connected to a three-dimensional scanner 304, one or more interfaces 306, and a dental restoration preform fabrication machine 308. In some embodiments of the invention, one more of the components of the system 300 are integrated into a single piece of hardware. For example, the computer 302 and the dental restoration preform fabrication machine 308 may be integrated into a single apparatus.

The computer 302 may be a general or special purpose computer. Such computers will typically include a central processing unit (CPU) that includes at least one processor. Such a computer will also typically include additional processing structures, such as graphical processor of a graphical processing unit (GPU). The one or more processors are coupled to one or more memory structures, which may be random access memory (RAM) devices, cache memories, non-volatile or backup memories, read-only memories, etc. In addition, memory may be considered to include memory storage physically located elsewhere in computer, e.g., any cache memory in a processor, as well as any storage capacity used as a virtual memory, e.g., as stored in a mass storage device or in another computer coupled to the computer 302.

The computer 302 will also typically include at least one communication interface comprising a number of input and output components for communicating with external devices. Such a communication interface can be provided with a wide variety of technologies. The communication interface components may be operable to couple the computer 302 to a network or devices. For example, the communication interface may include wired communication components, wireless communication components, cellular communication components, Near Field Communication (NFC) components, BLUETOOTH^{®} components, WIFI^{®} components, and other communication components to provide communication via other modalities. In embodiments of the invention, input and/or output components of the communication interface provide for communication to the scanner 304 and the dental restoration preform fabrication machine 308.

The computer 302 may further includes a data storage device. The data storage device is configured to record data persistently, where "persistently" or "persistent" refers as to a device's ability to maintain recorded data after loss of power. In some embodiments, the data storage device may correspond to non-disk storage media. For example, the data storage device may be one or more solid-state drives (SSDs), flash memory-based storage, any type of solid-state non-volatile memory, or any other type of non-mechanical storage device. In other implementations, the data storage device may include mechanical or spinning hard disk, such as hard-disk drives (HDD).

As an alternative to including the data storage device, or in addition to the data storage device, in embodiments the computer 302 is operatively linked to a data storage device that is physically separated from the structure of computer 302. For example, an input/output component of the communication interface of the computer 302 may be connected to a network through which the computer 302 receives data from an external data storage device.

It should be noted that a distributed computer system could be used to provide the functions of the computer 302 described herein. One example of a distributed computer system is a cloud-based architecture. As will be appreciated by those skilled in the art, cloud computing is the delivery of services-such as servers, storage, databases, networking, software, analytics, and intelligence-over the internet ("the cloud"). As an example of a cloud computing embodiment of the invention, a server computer could receive the data from the three-dimensional scanner 304, and the computer 302 could be client that accesses the data from the server.

The computer 302 is connected to one or more a user interfaces 306. The user interfaces 306 may include one or more user input devices (*e.g.,* a keyboard, a mouse, a trackball, a joystick, a touch pad, and/or a microphone, among others) and a display device (*e.g*., an LCD display panel). The user interfaces 306 allows a user to control operation of the computer. In other embodiments, the computer 302 is operatively linked to another device providing such a user interface. For example, the computer 302 may be connected to a network to which a remote workstation with a user interface is provided.

The computer 302 operates under the control of an operating system and executes or otherwise relies upon various computer software applications, components, programs, objects, units, data structures, etc., as will be described in greater detail below. Moreover, various applications, components, programs, objects, units, etc. may also execute on one or more processors in another computer coupled to computer 302 via a network, *e.g*., as in a distributed computer system, whereby the processing required to implement the functions of a computer program may be allocated to multiple computers over a network.

Embodiments of the invention include functional units that reside in memory device(s) of the computer 302. Each of the units is computer-executable code that, when executed by the computer's processors, imparts the unit's functionality to the computer 302. Those skilled in the art will recognize the coding languages and techniques that may be used to create the units. In the embodiment depicted in Figure 5, the computer 302 includes a receiving unit 400, a model creation unit 402, a segmenting unit 404, and an output unit 406.

The receiving unit 400 receives from the scanner 304 the three-dimensional data from a scan of the oral area where the dental restoration will be placed, including the prepared tooth. As described above, the three-dimensional scanner 304 captures the shape, contours, and dimensions of the prepared tooth and surrounding anatomy to which the dental restoration will be applied. Such three-dimensional scanners are well known in the art. In this case, the three-dimensional scanner is operatively connected (e.g., through a wired or wireless connection) to the computer 302 such that the data obtained using the scanner 304 can be transferred to the computer 302 and received by the receiving unit 400.

The model creation unit 402 creates a dental restoration preform model using the three-dimensional data received by the receiving unit 400. More specifically, using algorithms, the model creation unit 402 analyzes the scan data to design the model of the dental restoration preform so that the dental restoration that will ultimately be formed is tailored to the prepared tooth. As will be appreciated by those skilled in the art, embodiments of the model creation unit 402 may be implemented by specialized CAD software that allows the dental professional to work with the restoration model, positioning and sculpting the virtual restoration to match the natural anatomy and aesthetics of the patient's teeth. That is, the model creation unit 402 can receive input from the user for desired aspects of the dental restoration and create the dental restoration preform model based on the input. The model creation unit 402 is further configured to determine an effective volume that corresponds to the shape of the restoration preform required to build up the shape of the original tooth, or to a desired restoration shape.

The segmenting unit 404 is configured to determine at least one part of the dental restoration preform model that corresponds to an area where a form fit is required, for example, the region that connects to the preparation margin of the original tooth. In some embodiments, a dental professional may manually identify parts of the dental restoration preform model that correspond to the preparation margin and input the identified parts to the segmenting unit 404 using the interfaces 306. For example, the dental professional may manually mark the parts in a depiction of the model provided on a display screen. In other embodiments, the segmenting unit 404 automatically identifies the parts of the model that correspond to the preparation margin. Those skilled in the art will appreciate the various techniques that may be used to automatically identify the preparation margin areas.

Once the dental restoration preform model is finalized with the segmented part(s) corresponding to a preparation margin, the output unit 406 outputs the model to the dental restoration preform fabrication machine 308.

The dental restoration preform fabrication machine 308 may be, for example, a three-dimensional printer. The three-dimensional printer may be an SLA (Stereolithography) printer. Such a printer is configured to make the dental restoration preform using resin-based materials specifically engineered for biocompatibility and durability. These resins are typically polymers, such as light-curable photopolymers, which allow for precise layer-by-layer construction of detailed dental prosthetics. In an embodiment, the resins can be selected from a group comprising lithium-reinforced, leucite-reinforced plastics, or other similar materials. During the printing process, the printer deposits thin layers of liquid resin and shapes them according to the digital design. Once a layer is formed, it is cured, for example, by using high-intensity ultraviolet (UV) light. Alternatively, a plurality of layers may be cured together. This process repeats for each successive layer, resulting in a fully formed dental restoration that fits the patient's unique dental anatomy.
In an advantageous embodiment, the second part is an additional volume that is added to the effective volume. This additional amount of volume material allows the preform to connect to the original tooth, without creating a void between the original tooth and the preform. Hence, the border corresponds to an additional volume in relation to the effective volume in the form-fitting areas. A cross section of the second part may correspond to a width of between 0.05 - 0.5 mm. Preferably, the volume of the preform is smaller than the effective volume everywhere except in the second part.

3D printing systems have printing accuracy margins which result in deviations (also referred to as printing errors) between the desired printing dimensions and the actual printing dimensions. The dimensional accuracy of 3D printing systems includes a lateral printing accuracy and a vertical printing accuracy. These deviations may depend on factors such as for instance type of printing technique, registration errors, resin printing temperature and types of material used. Printing errors are also different for different printers and may vary over time.

The present 3D printing system may be configured as an SLA (Stereolithography) printing system. A typical lateral printing error for an SLA printing system may be between +/- 0.05 to 0.1 mm, and a typical vertical printing error of between 0.025 to 0.05 mm.

However, the present disclosure is not limited to 3D printing techniques, and other printing techniques such as for instance Vat polymerization, material extrusion, material jetting may be used.

The desired volume in the form-fitting areas may correspond to a printing error of the 3D printing machine. In an embodiment, the desired volume in the form-fitting areas of the preform is calculated with a compensation factor dependent on the dimensional printing accuracy of the 3D printing machine. The compensation factor is selected such that the printing error in relation to the effective volume (determined by the 3D scanner) is always a "positive error". The positive error means that the actual printed volume of the preform in the form-fitting region/second part is equal or larger than the desired printed volume. Preferably, the dimensions (such as the cross-section) of the second part correspond to the sum of the printing error and a compensation value. The compensation value skews the inherent printing error of the printing system such that the total printing error corresponds to a suitable cross-section of the second part. Hence, a high dimensional accuracy of the main body (i.e., a first part) can be achieved, while allocating the printing error margin to the extremity (i.e., second part) of the preform. And, hence, the desired volume of the second part corresponds to the sum of the effective volume, the printing error, and the compensation factor. Optionally, the volume of the second part may further be adjusted in relation to the printing resolution. Furthermore, the volume of the second part may further be adjusted in relation to the scanning error. The scanning error from the oral scanner may include a triangulation tolerance.

The dimensional accuracy dependent on material type can also vary among different materials due to their different shrinkage rates. The shrinkage rate can be determined in the 3D printer in relation to selected printing parameters or settings such as printing temperature. The shrinkage rate can be collected in a machine learning process where one or a plurality of settings (like temperature) and shrinkage can be determined for a plurality of materials and preferably also determined in connection with a material batch change. Preferably, the printing error may be an experimentally determined parameter that depends on the process, the material and the printer type. This experimentally determined parameter can be calculated in a machine-learning process.

In conventional three-dimensional printing of dental restorations, the printed restoration is rapidly hardened such that the final structure output from the three-dimensional printer is stable. But, as described herein, in embodiments of the present invention the output from the three-dimensional printer is a preform of the final dental restoration that includes at least one part that is shapeable, e.g., not fully hardened. More specifically, the part(s) of the dental restoration preform that correspond to the preparation margin are more shapable than other part(s) of the restoration preform. As such, the form fitting areas of the preform may be easily adjusted by the dental professional after the dental restoration preform is fabricated. Thus, during the process in which the dental professional places the restoration preform in the patient's mouth, the dental professional may shape the form fitting areas to ensure a precise fit at the preparation margin between the restoration and the prepared tooth.

In some embodiments, the dental restoration preform is configured such that the form fitting areas have a lower degree of polymerization than the other others of the dental restoration preform. The lower degree of polymerization areas may be achieved in a variety of ways. As one example, the prepolymer for the dental restoration may be selectively exposed with a variable-position light source that is controlled such that different areas of the dental restoration receive different intensities and/or durations of the polymerizing light. As another example, the areas of the prepolymer for the dental restoration are selectively exposed with an illumination array, such as a projector or structured light, in which illumination of parts of the dental restoration preform are controlled by a pixel-specific intensity and/or exposure duration. Hence, a first part and a second part of a preform are made from a light-curing material and may be provided with different grades of polymerization

In other embodiments, the dental restoration preform is such that different prepolymer materials are used to form the different areas of the preform. For example, prepolymer materials that cure by slightly different wavelengths of light may be used, with the form fitting areas of dental restoration preform curing being formed from materials that cure more slowly. As such, the forming fitting areas of the dental restoration preform may have a lower degree of polymerization after the curing is completed in the CAM system. In other examples, the different prepolymer materials may be such that they are cured at different wavelengths of light. Thus, areas other than the form fitting areas may be cured with one light source, whereas the form fitting areas may be cured by a different light source, and, thus, polymerized to a different degree. In still other examples, the prepolymer materials of the different areas may cure by different means. In a specific example, the form fitting areas of the dental restoration preform may cure chemically, whereas the other areas may be cured with a light source. As such, the form fitting areas may cure more slowly over time, than the other areas of the dental restoration preform. In yet other examples, the materials for the different areas may be provided with different photoinitiators or different amounts of a photoinitiator such that the form fitting areas cure more slowly than the other areas of the dental restoration preform.

Those skilled in the art will recognize the wide variety of techniques and materials that can be used to achieve the afore described ways to make the areas of the dental restoration preform different. Further, those skilled in the art will recognize equivalent or alternative techniques that will result in a dental restoration preform with different areas as in the above-described examples.

As discussed above, a dental restoration preform according to embodiments of the invention is such that at least one part of the preform that corresponds to a preparation margin is more shapable than another part of the preform. That is, one or more parts of the preform is more plastic or malleable so that the dental professional can easily change the shape of the part of the dental restoration preform that corresponds to the preparation margin. After the dental professional has achieved the desired fit of the dental restoration preform, the preparation areas may be solidified/hardened as the dental restoration preform is transformed into the final dental restoration. This may be done with a step in which the dental professional initiates the hardening, for example, by applying a curing light to the form fitting areas. In other embodiments, the preparation margin areas of the dental restoration preform may be hardened with application of the adhesive that is used to fix the dental restoration in place. In still other embodiments, the form fitting areas of the dental restoration preform may naturally harden without any further processing. Thus, the dental restoration that is hardened to a final degree may be fixed in the patient's mouth.

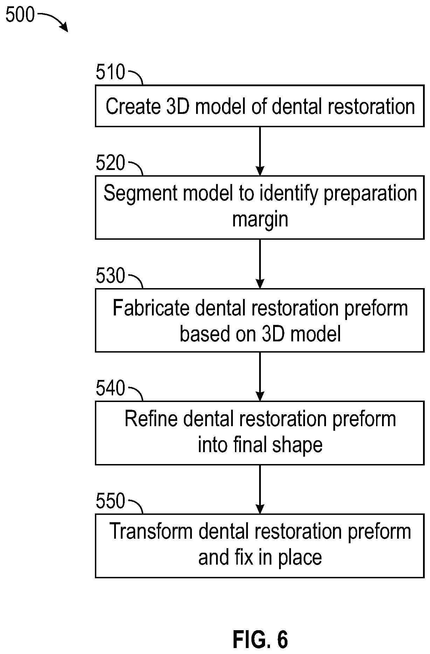

According to further embodiments of the invention, methods 500 of forming a dental restoration preform, forming a dental restoration, fixing a dental restoration in an oral area are provided. Figure 6 is a flow chart that shows steps of such methods.

In step 510, a three-dimensional model of a dental restoration preform is created. As discussed above, the model may be generated using a three-dimensional scan of the oral area where the final dental restoration is to be fixed, including the prepared tooth. As also discussed above, the model may be formed using CAD software with input from a user.

In step 520, the three-dimensional model is segmented to identify part(s) of the model that correspond to a preparation margin. As discussed above, the segmentation can be identified by a user and/or automatically identified by with a system according to embodiments of the invention.

In step 530, a dental restoration preform is fabricated based on the three-dimensional model. The dental restoration preform is formed such that part(s) of the preform that are determined in the segmentation to correspond to the preparation margin is made more shapeable than other parts of the preform. The more shapeable part(s) may be, for example, formed from a different material, have a lower degree of polymerization, be curable in a different way than another part of the preform, etc., as describes above. The dental restoration preform may be fabricated using, for example, a three-dimensional printer.

In step 540, the dental restoration preform is refined to a desired shape by a dental professional. The dental professional may reshape the parts of the dental restoration preform that correspond to the preparation margin to thereby enable a secure fit and tight seal between the restoration and the prepared tooth.

In step 550, the dental restoration preform is transformed into the final dental restoration and fixed is place to the prepared tooth. In the transformation, the parts of the dental restoration preform that are shapeable are fully solidified. For example, the shapeable part is cured using a specific curing light or chemical agent. It should be noted that the transformation of the dental restoration preform to the final dental restoration may involve further processing of the preform by the dental professional. Those skilled in the art will also recognize the well-known techniques for fixing a dental restoration in place in an oral area.

As described above, embodiments of the invention have the advantages associated with manual procedures for creating dental restorations and the advantages associated with CAD/CAM procedures for creating dental restorations. For example, the dental restoration preform can be quickly and easily formed using a CAD/CAM dental restoration system, but the dental professional can still make on-the-spot adjustments to the dental restoration to ensure a precise and secure fit at the preparation margin.

The foregoing description, for purpose of explanation, has been described with reference to specific implementations. However, the illustrative discussions above are not intended to be exhaustive or to limit the invention to the precise forms disclosed. Many modifications and variations are possible in view of the above teachings. The implementations described herein were chosen and described in order to best explain the principles of embodiments of the invention and its practical applications, to thereby enable others skilled in the art to best utilize embodiments of the invention and various implementations with various modifications as are suited to the particular use contemplated.

## Claims

1. A dental restoration preform comprising:
a first part corresponding to a main body; and
a second part that is located on an extremity of the first part,
wherein the second part is more shapable than the first part.

2. The dental restoration preform according to the claim 1, wherein the second part at least partially encircles the first part.

3. A dental restoration preform according to claim 1 or 2, wherein the first part and the second part are formed from at least one polymeric material, and the second part has a lower degree of polymerization than the first part.

4. A dental restoration preform according to claim 1 or 2, wherein the first part is made from a first material and the second part is made from a second material that is different from the first material.

5. A dental restoration preform according to claim 4, wherein the first and second materials are polymeric materials that are curable by different wavelengths of light.

6. A dental restoration preform according to claim 4, wherein the first material is curable by a light source and the second material is chemically curable.

7. A dental restoration made from the dental restoration preform according to any one of claims 1 to 6.

8. A method of forming a dental restoration preform, the method comprising:
creating three-dimensional model of a dental restoration preform;
determining at least one part of the three-dimensional model of the dental restoration preform that corresponds to a preparation margin; and
forming the dental restoration preform based on the dental restoration preform model with a first part and a second part that corresponds the at least one part of the dental restoration preform model that corresponds to the preparation margin, with the second part being more shapeable than the first part.

9. A method according to claim 8, wherein the first and second parts are formed from at least one polymeric material, and the second part has a lower degree of polymerization than the first part.

10. A method according to claim 8 or 9, wherein the first part is made from a first material and the second part is made from a second material that is different from the first material.

11. A method according to claim 8 or 9, wherein the first and second materials are polymeric materials that are cured by different wavelengths of light.

12. A method according to claim 8 or 9, wherein the first material is curable by a light source and the second material is chemically curable.

13. A method according to claim 8 or 9, wherein the first part and the second part are formed by selectively exposing a prepolymer with a light source such that the first part and the second receive at least one of different intensities and different durations of light.

14. A method according to claim 8 or 9, wherein the first part and the second part are formed by selectively exposing a prepolymer with an illumination array.

15. A method according to claim 8, wherein the first part and the second part are formed by a three-dimensional printing system that includes:
a computer including at least one processor configured to read out and execute instructions stored in at least one memory to thereby cause the computer to function as:
a receiving unit configured to receive three-dimensional scanning data from a scan of an area that the dental restoration preform is to be placed,
a model creation unit configured to create a model of the dental restoration preform using the three-dimensional scanning data,
a segmenting unit configured to determine at least one segmented part of the dental restoration preform model that corresponds to a preparation margin, and
an output unit configured to output the dental restoration preform model including the at least one segmented part; and
a dental restoration preform fabrication machine configured to receive the dental restoration preform model from the computer and to fabricate the dental restoration preform based on the dental restoration preform model such the dental restoration preform includes the first part and the second part corresponding to the at least one segmented part of the dental restoration preform model, with the second part being more shapeable than the first part;
wherein the segmenting unit is configured to at least one of (1) receive an input from a user to identify at least one part of the dental restoration preform model that corresponds to a preparation margin and (2) automatically identify the at least one part of the dental restoration preform model that corresponds to a preparation margin.
